# EUROPEAN PATENT APPLICATION

(11) **EP 2 202 995 A1**
(43) Date of publication of application: **30.06.2010**
(21) Application number: 08172727.3
(22) Date of filing: 23.12.2008
(51) Int. Cl.: H04Q 3/00, H04M 3/42

(54) **Controlling a call in a telecommunications network**

(71) Applicant: TELEFONAKTIEBOLAGET LM ERICSSON (publ), 164 83 Stockholm (SE)
(72) Inventor: Pisani, Alfonso, 84018 Scafati (SA) (IT); Maione, Biagio, 80126 Napoli (IT); Noldus, Rogier, 5052 BM Goirle (NL)
(74) Representative: von Zmuda-Trzebiatowski, Margarethe

(57) **Abstract**

Methods and devices for controlling a call in a telecommunications network are described. The telecommunications network comprises a service control entity (SCP204), a service switching entity (SSSF203) and a switching node (MSC205). The call is subject to a first service invoked for a first call party (CP201) and provided by the service control entity (SCP204), and to a second service invoked for a second call party (CP207) and provided by the switching node (MSC205). The service control entity (SCP204) performs the steps of receiving (239) a message comprising an indication of an invocation of the second service from the service switching entity (SSF203), selecting a procedure for handling the invocation of the second service based on a knowledge about the second service and a knowledge about the first service, and sending (240) an instruction to the service switching entity (SSF203) according to the procedure for handling the invocation of the second service.

## Description

### Technical field

The present invention relates to controlling a call in a telecommunications network.

### Background

In a telecommunications network several kinds of services can be provided.
A first kind of service is constituted by the so-called network based services. Examples of such services are multi party call, call forwarding, explicit call transfer. These services are controlled by a switching node, such as a Mobile Services Switching Center (MSC). A network based service can be provided and executed by the MSC but also by a Home Location Register (HLR).

In addition to the network based services such as above examples, there are also Intelligent Network services that are executed and controlled by an Intelligent Network (IN). According to the IN concept, service intelligence or service logic is separated from switching functions. This separation basically enables network operators to develop and deploy services and features independently of vendors, allowing more flexibility in service development, simplified rollout, reduced costs and greater autonomy. Examples of IN protocols are the Intelligent Network Application Protocol (INAP), the Advanced IN (AIN), and the Customized Applications for Mobile network Enhanced Logic (CAMEL). INAP was developed for fixed line networks and is the primary protocol used for fixed line IN outside of North America. AIN is a variant of IN developed for North America.

CAMEL is a Global System for Mobile communications (GSM) Phase 2+ and Universal Mobile Telecommunications System (UMTS) network feature specified in 3GPP TS 22.078. CAMEL is based on core INAP with modifications to take into account, amongst others, subscriber mobility. In particular, CAMEL enables the use of operator-specific services by a subscriber even when roaming outside the subscriber's Home Public Land Mobile Network (PLMN). A CAMEL-based Intelligent Network comprises as main entities a service switching entity for switching tasks, also referred to as SSF (Service Switching Function) or gsmSSF (GSM Service Switching Function) and a service control entity comprising the service intelligence or logic also referred to as SCF (Service Control Function) or gsmSCF (GSM Service Control Function).

A network based service, as stated before, is executed under control of switching nodes, whereas IN services are executed under the control of a service control entity and are invoked for certain calls only. Because of the two levels of control that are also separate from each other, inconsistencies may occur when an IN service is invoked for a call that may be in addition subject to a network based service. For example, a call may be forwarded by a switching node to an alternative destination, that according to the service logic of an IN service is on a barred list, resulting in inconsistent or undesirable service behavior. Especially when the IN service is invoked for a first call party, that is for the call party initiating the call, and the network based service is invoked by or for a second call party, the invocation and behavior of both services in the same call may lead to unwanted service interaction.

### Summary

It is therefore an object of the invention to provide methods, devices, and computer programs that improve control of a call subject to a first and a second service.

This object is achieved by the methods, devices, computer programs and a computer-readable medium product as described in the independent claims. Advantageous embodiments are described in the further claims.

In an embodiment a method for controlling a call in a telecommunications network is disclosed. The telecommunications network comprises a service control entity, a service switching entity and a switching node. The call is subject to a first service invoked for a first call party and provided by the service control entity, and to a second service invoked for a second call party and provided by the switching node. The service control entity receives a message comprising an indication of an invocation of the second service from the service switching entity, selects a procedure for handling the invocation of the second service based on a knowledge about the second service and a knowledge about the first service, and sends an instruction to the service switching entity according to the procedure for handling the invocation of the second service.

The service switching entity detects an invocation of the second service, sends a message comprising an indication of the invocation of the second service to the service control entity, receives an instruction from the service control entity according to a procedure for handling the invocation of the second service, and executes the instruction.

The embodiments of the invention enable the service control entity to control a call that is subject to a second service invoked for a second call party, whereby the service control entity is providing a first service invoked for a first call party. According to the invention, the service control entity receives from the service switching entity an indication that the second service is invoked for the second call party. Based on knowledge about the second service and about the first service and according to its internal service logic using a procedure for handling the invocation of the second service together with the capability to send out a corresponding instruction, the service control entity is fully empowered to control the call. The service control entity may determine how to continue the call that is subject to a second service invoked at a switching node of the network, or may decide that the call is to be discontinued, or that a notification sent to the first call party about the invocation of the second service is to be modified. The instruction to the service switching entity effecting that the service switching entity continues the call according to the instruction, extends the control of the call to further entities of the network like switching nodes. Therefore, inconsistencies in the handling of a call subject to a first service invoked for a first call party and provided by the service control entity caused by an invocation of a second service provided by a switching node and invoked for a second call party can be avoided.

In a further embodiment a service control entity is disclosed. The service control entity comprises a receiving unit for receiving messages, a transmitting unit for transmitting messages, a processing unit for controlling further units and for processing messages and information. The receiving unit is adapted to receive a message comprising an indication of an invocation of the second service from the service switching entity. The processing unit is adapted to process the indication of the invocation of the second service. The processing unit is further adapted to select a procedure for handling the invocation of the second service based on a knowledge about the second service and a knowledge about the first service. Furthermore the processing unit is adapted to initiate the transmission to the service switching entity via the transmitting unit of an instruction according to the procedure for handling the invocation of the second service.

In a further embodiment a service switching entity is disclosed. The service switching entity comprises a receiving unit for receiving messages, a transmitting unit for transmitting messages, a processing unit for controlling further units and for processing messages and information. The processing unit is adapted to initiate a procedure to detect an invocation of the second service. Further the processing unit is adapted to initiate the transmission of a message comprising an indication of the invocation of the second service to a service control entity via the transmission unit. The receiving unit is adapted to receive an instruction from the service control entity according to a procedure for handling the invocation of the second service. The processing unit is adapted to process and execute the instruction.

The invention furthermore concerns a computer program loadable into a processing unit of a service control entity and a computer program loadable into a processing unit of a service switching entity to perform any of the steps of the aforementioned methods when operated at the respective device. The computer program can be stored on a computer readable medium. The computer-readable medium can be a permanent or rewritable memory within the service control entity or the service switching entity or located externally. The computer program can be also transferred to the service control entity for example via a cable or a wireless link as a sequence of signals.

In the following, detailed embodiments of the present invention shall be described in order to give the skilled person a full and complete understanding. However, these embodiments are illustrative and are not intended to be limiting.

### Brief description of the drawings

- Fig.1: shows an exemplary arrangement of nodes in a telecommunications network for controlling a call according to an embodiment of the invention;
- Fig. 2a: shows a first sequence diagram depicting exemplary messages exchanged in the telecommunications network of Fig. 1 according to a first exemplary embodiment of the invention;
- Fig. 2b: shows a second sequence diagram depicting exemplary messages exchanged in a telecommunications network according to a second exemplary embodiment of the invention;
- Fig.2c: shows a second sequence diagram depicting exemplary messages exchanged in a telecommunications network according to a second exemplary embodiment of the invention;
- Fig. 3: shows a flow diagram of exemplary steps performed by a service control entity of the arrangement of Fig. 1, Fig. 2a or Fig. 2b; and
- Fig. 4: shows a flow diagram of exemplary steps performed by a service switching entity of the arrangement of Fig. 1, Fig. 2a or Fig. 2b;
- Fig. 5: shows an exemplary block diagram of the service control entity of Fig. 3; and
- Fig. 6: shows an exemplary block diagram of the service switching entity of Fig. 4.

### Detailed description

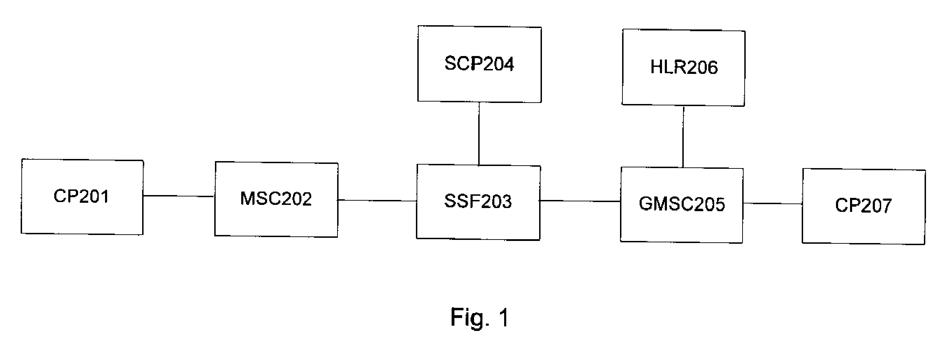

Fig. 1 depicts an arrangement in a telecommunications network in an exemplary embodiment.

The telecommunications network comprises a first call party CP201, a switching node MSC202 serving the first call party CP201, a service switching entity SSF203 and a service control entity SCP204. Furthermore, a switching node GMSC205, is depicted and a service node HLR206, both serving a second call party CP207. The switching node GMSC205 and the service node HLR206 are responsible for executing network based services invoked for the second call party CP207.

Intelligent Networks services are executed by and under the control of the service control entity SCP204. The service control entity SCP204 is able to communicate with the service switching entity SSF203 using an Intelligent Network protocol such as CAMEL or INAP. The service switching SSF203 may be located at the switching node MSC202. Alternatively, the service switching entity SSF203 may be implemented as a separate node.

It should be noted that whenever the phrase "invoked for a call party" in the remainder is used, it also comprises the option "invoked by a call party". "Invoked by" means that the call party at its option explicitly performs an action that establishes the immediate invocation of the service. Examples of services that are invoked by a call party are the network based service Explicit Call Transfer (ECT) and Multi party call (MPTY). However, for an IN service it is common to state that it is invoked for a call party and the same applies to a network based service such as call forwarding. These services are invoked because of predefined settings present for a call party, leading to the invocation of such service for every call either initiated or received by the call party, without any explicit action taken by the call party. As stated before the phrase "invoked for a call party" is intended to comprise both "invoked for a call party" and "invoked by a call party" according to above explanation.

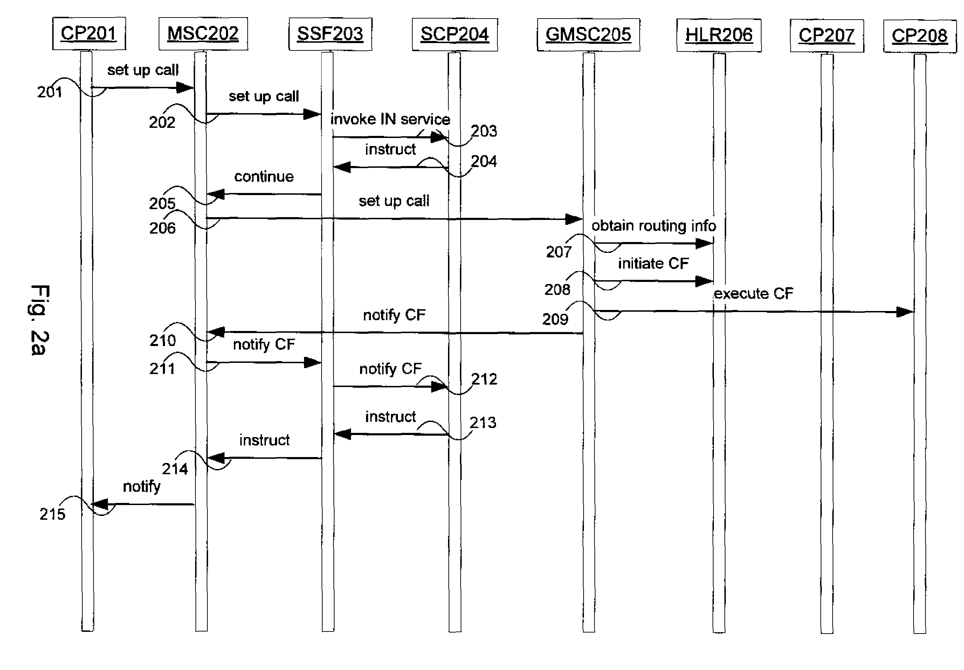

Fig. 2a depicts a sequence diagram showing messages exchanged in a telecommunications network in a first exemplary embodiment. The sequence diagram provides exemplary messages that are exchanged between the nodes shown under Fig. 1. Shown in Fig. 2a are a first call party CP201, a switching node MSC202 serving the first call party CP201, a service switching entity SSF203, a service control entity SCP204, a switching node GMSC205, a service node HLR206, a second call party CP207 and a third call party CP208 (not depicted in Fig. 1).

According to this embodiment the first call party CP201 sets up a call towards the second call party CP207. Furthermore, the first call party CP201 has a subscription to an originating Intelligent Networks service, e.g. a Virtual Private Network service that is executed by the service control entity SCP204. Hence, the VPN service is invoked for each call that is originated by the first call party CP201, i.e. control of the call is transferred from the switching node MSC202 to the service control entity SCP204.
Further according to this embodiment a second service is invoked for the second call party CP207 during the call establishment. In this example the network based service call forwarding unconditional (CFU) is invoked, forwarding all incoming calls originally destined for the second call party CP207 to the third call party CP208.

In step 201 the first call party CP201 sends a request to the switching node MSC202 to set up a call to the second call party CP207. The request may be sent in a Direct transfer application part (DTAP) Setup message.

In step 202 the switching node MSC202 sends the request to the service switching entity SSF203, e.g. by sending an Initial Addressing Message (IAM) in case of call control protocol Integrated Services Digital Network (ISDN) User Part (ISUP).

In step 203 the service switching entity SSF203 may create an instance of a Basic Call State Model (BCSM) comprising an event detection point related to the invocation of a network based service by the second call party CP207.
Then the service switching entity SSF203 invokes the IN service for the first call party CP201 by sending an initial message to the service control entity SCP204, for example an Initial Detection Point (IDP) message according to the INAP or CAMEL protocol. The initial message comprises among others an indication of the calling party, i.e. the first call party CP201, an indication of the called party, i.e. the second call party CP207, and an indication of the service to be invoked for the first call party CP201.

I n response the service control entity SCP204 executes the indicated IN service, which is in this example a VPN service. A VPN service may for example comprise service logic for performing a number translation of the dialed number, a screening of the dialed number or an adapted charging of the call. In step 204 the service control entity SCP204 sends an instruction to the service switching entity SSF203 based on the service logic of the VPN service. According to the embodiment, the instruction further comprises a request to monitor for the invocation of a call forwarding service by the second call party CP207. The instruction may be sent in a CAMEL Request Report BCSM (Basic Call State Model) message comprising an indication that the service switching entity SSF203 shall initiate a process for detecting an invocation of call forwarding by the second call party CP207.

In a further embodiment, the instruction comprises a request to monitor for the invocation of any of a group of network based services by the second call party CP207.

The service switching entity SSF203, following the instruction from the service control entity SCP204, arms the event detection point in the BCSM for detecting the event that call forwarding is invoked subsequently in the call establishment. This allows the service switching entity SSF203 to be notified when call forwarding is invoked by a succeeding switching node and to report that event to the service control entity SCP204.

In step 205 the service switching entity SSF203 informs the switching node MSC202 in a message, e.g. a call set up message, to continue the call set up process.

In step 206 the switching node MSC202 continues the call set up to the second call party CP207 by sending a message, again for example a call set up message, to a gateway switching node GMSC205.

In step 207, the gateway switching node GMSC205 interrogates a home location register HLR206. In step 208 the home location register HLR206 sends a message to inform the gateway switching node GMSC205 that the second call party CP207 has activated call forwarding unconditional towards the third call party CP208. The message comprises an indication of the call forwarding number, i.e. a destination number of the third call party CP208.

In step 209 the gateway switching node GMSC205 performs the actual call forwarding service by sending a message, e.g. a call setup message to the third call party CP208. In this embodiment it is assumed that the third call party CP208 is also served by the gateway switching node GMSC205. When the third call party answers the call, it may send an answer message (not depicted in Fig. 2a) towards the gateway switching node GMSC205.

In step 210 the gateway switching node GMSC205 sends a message to the switching node MSC202 comprising an indication of the invocation of the call forwarding service for the second call party CP207. The message may comprise an indication of the call forwarding number. The message may be an Address complete message ACM or a Call Progress message (CPG) in the case of call control protocol ISUP as well as in the case of call control protocol Bearer Independent Call Control (BICC).

In step 211 the switching node MSC202 sends the message comprising the indication of the invocation of the call forwarding service to the service switching entity SSF203.

In step 212 the service switching entity SSF203 analyses the message comprising the indication of the invocation of the call forwarding service and optionally the indication of the call forwarding number. It determines that the message constitutes an event related to the event detection point for the call forwarding service that has been armed in response to the request received from the service control point SCP204 in step 204. Then the service switching entity SSF203 sends a message to the service control entity SCP204 comprising an indication of the invocation of the call forwarding service by the second call party CP207. The message may be a CAMEL Event Report Basic Call State Model (BCSM) message. The message may comprise one or more dedicated information elements for the indication of the invocation of the call forwarding service and for the indication of the call forwarding number.

The service control entity SCP204 receives the indication of the invocation of the call forwarding service and is now informed of the invocation of a second service for the second call party CP207. This information enables the service control entity SCP204 to take control of the call that is subject to a second service invoked for the second call party CP207. The service control entity SCP204 comprises service logic for analyzing the received information and for determining how to respond to it, and it selects a procedure for handling the invocation accordingly. In the following, three examples are given of procedures to be selected and the subsequent steps performed by the nodes involved, i.e. the service control entity SCP204, the service switching entity SSF203 and the switching node MSC202.

According to a first exemplary procedure the service control entity SCP204 may store in a call log an indication that the second call party CP207 has invoked call forwarding and additionally store the indication of the call forwarding number. In step 213 the service control entity SCP204 sends an instruction to the service switching entity SSF203 to continue the call establishment, for example it may send a CAMEL Continue message. The service switching entity SSF203 sends in step 214 an appropriate message, corresponding to the instruction contained in the message received in step 213, to the switching node MSC202 in order to allow the call establishment to continue. For example, the service switching entity SSF203 may send a Continue message. In step 215 the switching node MSC202 sends a message to the first call party CP201 comprising a notification that the call to the second call party CP207 has been forwarded to the third call party CP208. The message may be an appropriate DTAP message and may comprise an indication of the call forwarding number of the third call party CP208.

According to a second exemplary procedure the service control entity SCP204 may decide to disallow the call establishment, for example if after screening the call forwarding number according to a call screening list of the first service it decides that the first call party CP201 is not allowed to be connected to the call forwarding number. In step 213 the service control entity SCP204 sends an instruction accordingly, for example a CAMEL Release Call message. In step 214 the service switching entity SSF203 sends an appropriate message, such as a Release message, to the switching node MSC202 in order to discontinue the call. In this embodiment the switching node MSC202 sends in step 215 a message to the first call party CP201 comprising an indication that the call establishment has been discontinued.

According to a third exemplary procedure the service control entity SCP204 may decide to continue the call establishment but to modify the notification towards the first call party CP201. For example it may decide that no notification is to be sent at all, or that the type of message which carries the notification is to be changed, e.g. from ISUP/DTAP signalling to Unstructured Supplementary Service Data (USSD). In step 213 the service control entity SCP204 sends an instruction to the service switching entity SSF203 indicating the requested modification, for example a CAMEL Continue With Argument (CWA) message. In step 214 the service switching entity SSF203 sends an appropriate message, such as a Call progress message, to the switching node MSC202 in order to modify the notification to the first call party CP201 accordingly. In step 215 the switching node MSC202 sends a modified notification to the first call party CP201 in accordance with the instruction from the service control entity SCP201, e.g. by sending a Progress message.

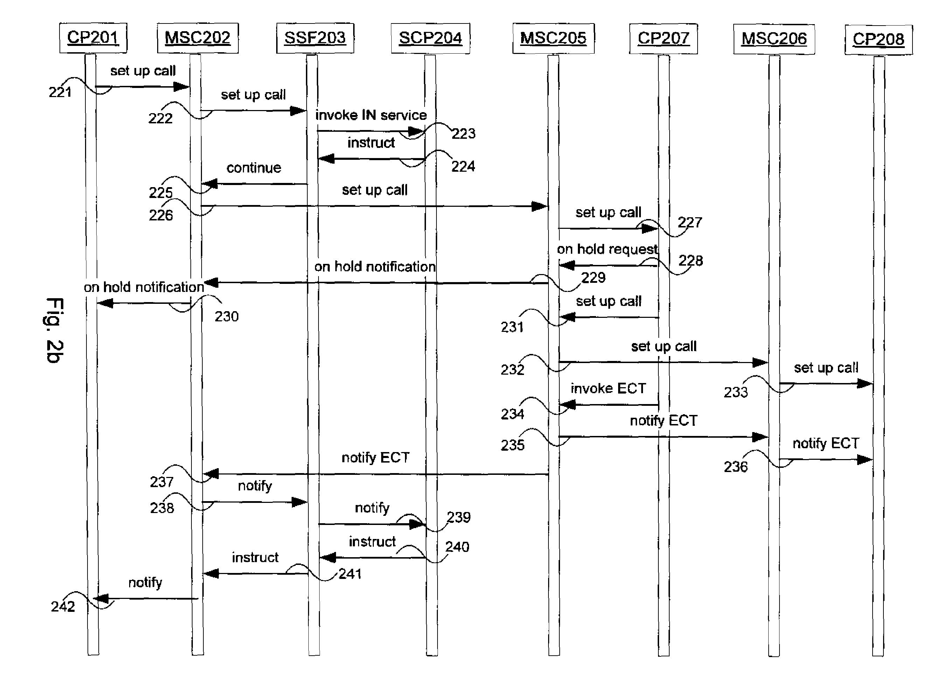

The sequence diagram shown under Fig. 2b provides a similar arrangement of nodes in a telecommunications network to the arrangement of Fig. 2a.
Depicted are a first call party CP201, a switching node MSC202 serving the first call party CP201, a service switching entity SSF203, a service control entity SCP204, a second call party CP207, a switching node MSC205 serving the second call party CP207, a third call party CP208 and a switching node MSC206 serving the third call party CP208 (not depicted in Fig. 2a). Furthermore, the service node HLR206 in Fig. 2a is not shown in Fig. 2b.

Similar to the embodiment described with reference to Fig. 2a, the first call party CP201 sets up a call towards the second call party CP207 and has a subscription to an originating Intelligent Networks service that is executed by the service control entity SCP204. Also, a second service is invoked for the second call party CP207 during the call. According to the example depicted in Fig. 2b, the network based service explicit call transfer (ECT) is invoked. The ECT service allows the second call party CP207 to put the ongoing call with the first call party CP201 on hold and to set up a second call to the third call party CP208. The second call party CP207 may then connect the first call party CP201 to the third call party CP208 and release its own connection with the network.

The steps 221 to 226 of Fig. 2b are similar to steps 201 to 206 of Fig. 2a.
In step 221 the first call party CP201 sends a request to the switching node MSC202 to set up a call to the second call party CP207. The message may be a DTAP Setup message. In step 222 the switching node MSC202 sends the request to the service switching entity SSF203, e.g. in an ISUP IAM message. The service switching entity SSF203 may create an instance of a Basic Call State Model (BCSM) comprising an event detection point related to the invocation of a network based service by the second call party CP207. In step 223 the service switching entity SSF203 invokes the IN service for the first call party CP201 by sending an initial message to the service control entity SCP204, for example a CAMEL IDP message. The initial message comprises among others an indication of the calling party, i.e. the first call party CP201, an indication of the called party, i.e. the second call party CP207, and an indication of the service to be invoked for the first call party CP201. In step 224 the service control entity SCP204 sends an instruction to the service switching entity SSF203 based on the service logic of the IN service. According to the embodiment, the instruction further comprises a request to monitor for the invocation of an ECT service by the second call party CP207. The instruction may be sent in a CAMEL Request Report BCSM (Basic Call State Model) message comprising an indication that the service switching entity SSF203 shall initiate a process for detecting an invocation of an explicit call transfer by the second call party CP207.

In a further embodiment, the instruction comprises a request to monitor for the invocation of any of a group of network based services by the second call party CP207.

The service switching entity SSF203, following the instruction from the service control entity SCP204, arms the event detection point in the BCSM for detecting the event that the ECT service is invoked subsequently in the call. This allows the service switching entity SSF203 to be notified when the ECT service is invoked by a succeeding switching node and to report that event to the service control entity SCP204.

In step 225 the service switching entity SSF203 informs the switching node MSC202 in a message, e.g. a call set up message, to continue the call set up process.

In step 226 the switching node MSC202 continues the call set up to the second call party CP207 by sending a message, again for example a call set up message, to the switching node MSC205.

In step 227 the switching node MSC205 sends a message, e.g. a call set up message, to the second call party CP207. Upon answering the call the second call party CP207 may send a message, such as an ISUP Answer message or a DTAP Connect message, to the switching node MSC205, not depicted.

In step 228 the second call party CP207 sends a request to the switching node MSC205 to put the call with the first call party CP201 on hold. In response the switching node MSC205 holds the call and sends in step 229 a message comprising an on hold notification to the switching node MSC202 that is serving the first call party CP201. The switching node MSC202 sends the message comprising the on hold notification to the first call party CP201 in step 230.

In step 231 the second call party CP207 sends a request to the switching node MSC205 to set up a call to the third call party CP208, e.g. by sending a call set up message. In step 232 the switching node MSC205 sends the request to the switching node MSC206 serving the third call party CP208, via a gateway switching node and a home location register serving (not depicted). In step 233 the switching node MSC206 sends a message to the third call party CP208, e.g. by sending a DTAP Setup message. The third call party CP208 sends an answer message upon answering the call, not depicted in Fig. 2b. As a result there is an active call between the second call party CP207 and the third call party CP208.

In step 234 the second call party CP207 sends a message to the switching node MSC205 to invoke the ECT service, i.e. to establish a connection between the first call party CP201 and the third call party CP208. The message may be an ISUP Facility (FAC) message or a DTAP Facility message. In an alternative embodiment, the second call party CP207 may invoke the ECT service prior to having an active call with the third call party CP208, i.e. during the alerting phase of the third call party CP208. The switching node MSC205 executes the ECT service and connects the first call party CP201 and the third call party CP208.

In step 235 the switching node MSC205 sends a message comprising an indication of the invocation of the ECT service towards the switching node MSC206, which sends the message to the third call party CP208 in step 236. The message may be an ISUP or BICC Facility (FAC) message if the third call party CP208 has an active call with the second call party CP207 at the time of the invocation of the ECT service. Alternatively, the message may be an ISUP or BICC Call progress (CPG) message if the third call party CP208 is in alerting phase at the time of the invocation of the ECT service.

In step 237 the switching node MSC205 sends a message comprising the indication of the invocation of the ECT service towards the switching node MSC202.
The message may again be an ISUP or BICC Facility message or an ISUP or BICC Call Progress message. The message may comprise an indication of the transfer number, i.e. the subscriber number of the third call party CP208.
The switching node MSC205 now releases the connection with the second call party, e.g. by sending a disconnect message to the second call party CP207, which sends a release message in return to the switching node MSC205, which finally sends a release complete message to the second call party CP207, not depicted in Fig. 2b.

In step 238 the switching node MSC202 sends the message to the service switching entity SSF203. In step 239 the service switching entity SSF203 analyses the message comprising the indication of the invocation of the ECT service and optionally the indication of the transfer number. It determines that the message constitutes an event related to the event detection point for the ECT service that has been armed in response to the request received from the service control point SCP204 in step 224. Then the service switching entity SSF203 sends a message to the service control entity SCP204 comprising an indication of the invocation of the ECT service by the second call party CP207. The message may be a CAMEL Event Report Basic Call State Model (BCSM) message. The message may comprise one or more dedicated information elements for the indication of the invocation of the ECT service and for the indication of the transfer number.

The service control entity SCP204 receives the indication of the invocation of the ECT service and is now informed of the invocation of a second service by the second call party CP207. This information enables the service control entity SCP204 to take control of the call that is subject to a second service invoked by the second call party CP207. The service control entity SCP204 comprises service logic for analyzing the received information and for determining how to respond to it, and it selects a procedure for handling the invocation accordingly. Similar to the embodiment described with reference to Fig. 2a, three exemplary procedures are described in the following.

According to a first exemplary procedure the service control entity SCP204 may store in a call log an indication that the second call party CP207 has invoked the ECT service and additionally store the indication of the transfer number. In step 240 the service control entity SCP204 sends an instruction to the service switching entity SSF203 to continue the call or call establishment, for example it may send a CAMEL Continue message. The service switching entity SSF203 sends in step 241 an appropriate message, corresponding to the instruction contained in the message received in step 240, to the switching node MSC202 serving the first call party CP201 in order to allow the call to continue. The service switching entity SSF203 may for example send a Continue message. In step 242 the switching node MSC202 sends a message to the first call party CP201 comprising a notification that the second call party CP207 has transferred the call to the third call party CP208. The message may be an appropriate DTAP message, and may comprise an indication of the transfer number, i.e. the subscriber number of the third call party CP208.

According to a second exemplary procedure the service control entity SCP204 may decide to disallow the call establishment, for example if after screening the transfer number according to a call screening list of the first service it decides that the first call party CP201 is not allowed to be connected to the transfer number. In step 240 the service control entity SCP204 sends an instruction accordingly, for example a CAMEL Release Call message. In step 241 the service switching entity SSF203 sends an appropriate message, such as a Release message, to the switching node MSC202 in order to discontinue the call. In this embodiment the switching node MSC202 sends in step 242 a message to the first call party CP201 comprising an indication that the call or call establishment has been discontinued.

According to a third exemplary procedure the service control entity SCP204 may decide to continue the call but to modify the notification towards the first call party CP201. For example it may decide that no notification is to be sent at all, or that the type of message which carries the notification is to be changed, e.g. from ISUP/DTAP signalling to Unstructured Supplementary Service Data (USSD). In step 240 the service control entity SCP204 sends an instruction to the service switching entity SSF203 indicating the requested modification, for example a CAMEL Continue With Argument (CWA) message. In step 241 the service switching entity SSF203 sends an appropriate message, such as a Call progress message, to the switching node MSC202 in order to modify the notification to the first call party CP201 accordingly. In step 242 the switching node MSC202 sends a modified notification to the first call party CP201 in accordance with the instruction from the service control entity SCP204, e.g. by sending a Progress message.

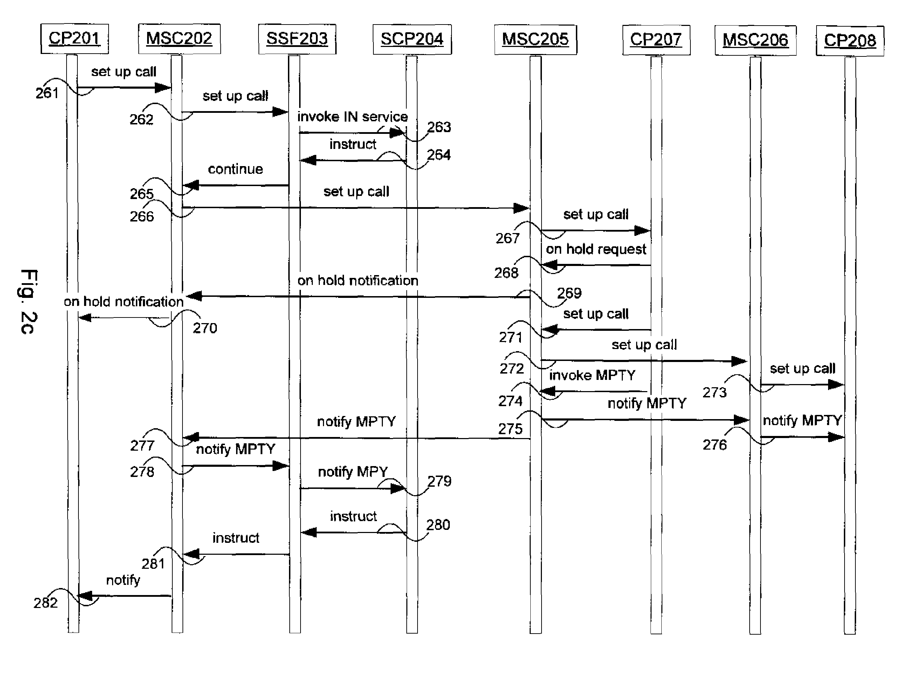

The sequence diagram shown under Fig. 2c provides a similar arrangement of nodes in a telecommunications network to the arrangement of Fig. 2b. Depicted are a first call party CP201, a switching node MSC202 serving the first call party, a service switching entity SSF203, a service control entity SCP204, a second call party CP207, a switching node MSC205 serving the second call party CP207, a third call party CP208 and a switching node MSC206 serving the third call party CP208.

In this embodiment the first call party CP201 sets up a call towards the second call party CP207 and has a subscription to an originating Intelligent Networks service that is executed by the service control entity SCP204. The network based service that is invoked by the second call party CP207 in this example is the service multi party call (MPTY). The MPTY service enables the second call party CP207 to add the third call party CP208 to the ongoing call with the first call party CP201, effecting a call between three parties.

In step 261 the first call party CP201 sends a request to the switching node MSC202 to set up a call to the second call party CP207. The message may be a DTAP Setup message. In step 262 the switching node MSC202 sends the request to the service switching entity SSF203, e.g. in an ISUP IAM message. The service switching entity SSF203 may create an instance of a Basic Call State Model (BCSM) comprising an event detection point related to the invocation of a network based service by the second call party CP207. In step 263 the service switching entity SSF203 invokes the IN service for the first call party CP201 by sending an initial message to the service control entity SCP204, for example a CAMEL IDP message. The initial message comprises among others an indication of the calling party, i.e. the first call party CP201, an indication of the called party, i.e. the second call party CP207, and an indication of the service to be invoked for the first call party CP201. In step 264 the service control entity SCP204 sends an instruction to the service switching entity SSF203 based on the service logic of the IN service. According to the embodiment, the instruction further comprises a request to monitor for the invocation of an MPTY service by the second call party CP207. The instruction may be sent in a CAMEL Request Report BCSM (Basic Call State Model) message comprising an indication that the service switching entity SSF203 shall initiate a process for detecting an invocation of a multi party service by the second call party CP207.

In a further embodiment, the instruction comprises a request to monitor for the invocation of any of a group of network based services by the second call party CP207.

The service switching entity SSF203, following the instruction from the service control entity SCP204, arms the event detection point in the BCSM for detecting the event that the MPTY service is invoked subsequently in the call. This allows the service switching entity SSF203 to be notified when the MPTY service is invoked by a succeeding switching node and to report that event to the service control entity SCP204.

In step 265 the service switching entity SSF203 informs the switching node MSC202 in a message, e.g. a call set up message, to continue the call set up process.

In step 266 the switching node MSC202 continues the call set up to the second call party CP207 by sending a message, again for example a call set up message, to the switching node MSC205 serving the second call party CP207.

In step 267 the switching node MSC205 sends a message, e.g. a call set up message, to the second call party CP207. Upon answering the call the second call party CP207 may send a message, such as an ISUP answer message or DTAP Connect message, to the switching node MSC205, not depicted.

In step 268 the second call party CP207 sends a request to the switching node MSC205 to put the call with the first call party CP201 on hold. In response the switching node MSC205 holds the call and sends in step 269 a message comprising an on hold notification to the switching node MSC202 that is serving the first call party CP201. The switching node MSC202 sends the message comprising the on hold notification to the first call party CP201 in step 270.

In step 271 the second call party CP207 sends a request to the switching node MSC205 to set up a call to the third call party CP208, e.g. by sending a call set up message. In step 272 the switching node MSC205 sends the request to the switching node MSC206 serving the third call party CP208, via a gateway switching node and a home location register serving (not depicted). In step 273 the switching node MSC206 sends a message to the third call party CP208, e.g. by sending a DTAP Setup message. The third call party CP208 sends an answer message upon answering the call, not depicted in Fig. 2c. As a result there is an active call between the second call party CP207 and the third call party CP208.

In step 274 the second call party CP207 sends a message to the switching node MSC205 to invoke MPTY, i.e. to add the first call party CP201 to the call with the third call party CP208, thereby establishing a call between three parties. The message may be an ISUP Facility (FAC) message or a DTAP Facility message.

The switching node MSC205 connects the first call party CP201 to the call between the second call party CP207 and the third call party CP208. In step 275 the switching node MSC205 sends a message comprising an indication of the invocation of MPTY towards the switching node MSC206, which sends the message to the third call party CP208 in step 276. The message may be an ISUP or BICC Call Progress message (CPG) or a DTAP Progress message The message may comprise an indication of the additional party number, i.e. the subscriber number of the first call party CP201.

In step 277 the switching node MSC205 sends a message comprising the indication of the invocation of MPTY towards the switching node MSC202.
The message may again be an ISUP or BICC Facility message or an ISUP or BICC Call Progress message. The message may comprise an indication of the additional party number, i.e. the subscriber number of the third call party CP208.

In step 278 the switching node MSC202 sends the message to the service switching entity SSF203. In step 279 the service switching entity SSF203 analyses the message comprising the indication of the invocation of the MPTY service and optionally the indication of the additional party number. It determines that the message constitutes an event related to the event detection point for the MPTY service that has been armed by SSF203 in response to the request received from the service control point SCP204 in step 264. Then the service switching entity SSF203 sends a message to the service control entity SCP204 comprising an indication of the invocation of the MPTY service by the second call party CP207. The message may be a CAMEL Event Report Basic Call State Model (BCSM) message. The message may comprise one or more dedicated information elements for the indication of the invocation of the MPTY service and for the indication of the additional party number.

The service control entity SCP204 receives the indication of the invocation of the MPTY service and is now informed of the invocation of a second service by the second call party CP207. This information enables the service control entity SCP204 to take control of the call that is subject to a second service invoked by the second call party CP207. The service control entity SCP204 comprises service logic for analyzing the received information and for determining how to respond to it, and it selects a procedure for handling the invocation accordingly. Similar to the embodiments described with reference to Fig. 2a and 2b, three exemplary procedures are described in the following.

According to a first exemplary procedure the service control entity SCP204 may store in a call log an indication that the second call party CP207 has invoked MPTY and additionally store the indication of the additional party number. In step 280 the service control entity SCP204 sends an instruction to the service switching entity SSF203 to continue the call, for example it may send a CAMEL Continue message. The service switching entity SSF203 sends in step 281 an appropriate message, corresponding to the instruction contained in the message received in step 280, to the switching node MSC202 serving the first call party CP201 in order to allow the call to continue. The service switching entity SSF203 may send a Continue message, for example. In step 282 the switching node MSC202 sends a message to the first call party CP201 comprising a notification that the second call party CP207 has set up a multi party call. The message may be an appropriate DTAP message, such as a DTAP Facility (FAC), and may comprise an indication of the additional party number, i.e. the subscriber number of the third call party CP208.

According to a second exemplary procedure the service control entity SCP204 may decide to disallow the call establishment, for example if after screening the additional party number according to a call screening list of the first service it decides that the first call party CP201 is not allowed to be connected to the third call party CP208. In step 280 the service control entity SCP204 sends an instruction accordingly, for example a CAMEL Release Call message. In step 281 the service switching entity SSF203 sends an appropriate message to the switching node MSC202 in order to discontinue the call. In this embodiment the switching node MSC202 sends in step 282 a message to the first call party CP201 comprising an indication that the call establishment has been released.

According to a third exemplary procedure the service control entity SCP204 may decide to continue the call but to modify the notification towards the first call party CP201. For example it may decide that no notification is to be sent at all, or that the type of message which carries the notification is to be changed, e.g. from ISUP/DTAP signalling to Unstructured Supplementary Service Data (USSD). In step 280 the service control entity SCP204 sends an instruction to the service switching entity SSF203 indicating the requested modification, for example a CAMEL Continue With Argument (CWA) message. In step 281 the service switching entity SSF203 sends an appropriate message to the switching node MSC202 in order to modify the notification to the first call party CP201 accordingly. In step 282 the switching node MSC202 sends a modified notification to the first call party CP201 in accordance with the instruction from the service control entity SCP201, e.g. by sending a Progress message.

According to the exemplary embodiments provided by Fig. 2a, 2b and 2c, the call party that is initiating the call, i.e. the first call party CP201, is also the call party for whom the IN service is invoked and the call party that is being called, i.e. the second call party CP207, is the call party by or for whom the network based service is invoked. However the invention is also applicable to call scenario's where the first call party CP201 invokes the network based service and the second call party CP207 invokes the IN service.

It is also conceivable that the third call party CP208 invokes a network based service in any of the embodiments described with reference to Fig. 2a, 2b and 2c. For example, the embodiment of Fig. 2a may be extended such that the third call party CP208 has a call forwarding service to a fourth call party. According to the invention the service switching entity SSF203 now does not only receive an indication of the invocation of the call forwarding service for the second call party CP207, but also an indication of the invocation of the call forwarding service for the third call party CP208. Similarly, in the embodiment of Fig. 2a the third call party CP208 may during the call with the first call party CP201 invoke the ECT service to a fourth call party, leading to the scenario where the service switching entity SSF203 receives two indications of the invocation of a second service; a first indication in relation to the invocation of the call forwarding service for the second call party CP207 and a second indication in relation the invocation of the ECT service by the third call party CP208.
Each of the multiple indications of an invocation of a network based service by any party is sent to the service control entity SCP204 provided that the corresponding event had been armed in the SSF203 for this call, enabling the service control entity SCP204 to be informed of such invocation and to take control of the call.

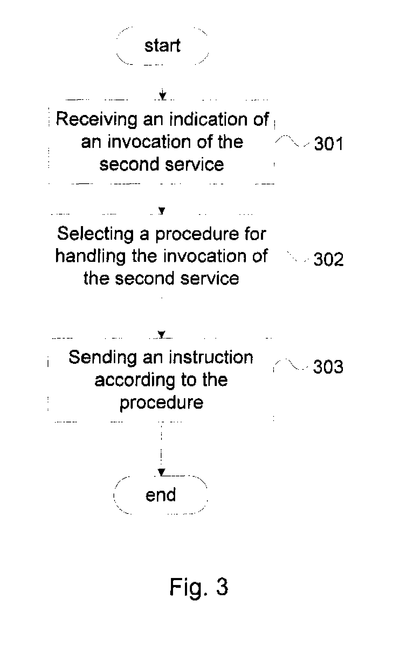

Fig. 3 depicts exemplary steps performed by the service control entity of Fig. 2a, 2b and 2c according to an embodiment of the invention.

In a first step 301 the service control entity receives a message comprising an indication of an invocation of the second service from the service switching entity.

In a second step 302 the service control entity selects a procedure for handling the invocation of the second service based on a knowledge about the second service and a knowledge about the first service.

In a third step 303 the service control entity sends an instruction to the service switching entity according to the procedure for handling the invocation of the second service.

The method may end here or may continue with any of the steps described herein.

In an embodiment the service control entity may further send a request for monitoring the invocation of the second service to the service switching entity. This allows the service control entity to indicate to the service switching entity for which second service it is desirable to receive an indication of the invocation.

In an embodiment the procedure comprises one of:
- storing the knowledge about the second service in a call log related to the first service,
- initiating discontinuing the call,
- initiating the modification of a notification of the second service sent by the switching node towards the first call party.

In an embodiment the message received from the service switching entity further comprises the knowledge about the second service.

In a further embodiment the knowledge about the second service comprises one of:
- an indication of a call forwarding number, if the second service is a call forwarding service,
- an indication of a transfer number, if the second service is an explicit call transfer service,
- an indication of an additional party number, if the second service is a multi party service.

The knowledge allows the service control entity to take into account details about the invocation of the second service when deciding how to continue the call.

In an embodiment the knowledge about the first service comprises a call screening list. The call screening list comprises numbers that the first call party is not allowed to be connected to. It enables the service control entity to screen any of the indicated numbers comprised in the knowledge about the second service. For example, the indication of the call forwarding number of the second service may be compared to the numbers on the call screening list of the first service. If there is a match the service control entity may decide not to allow the call to continue.

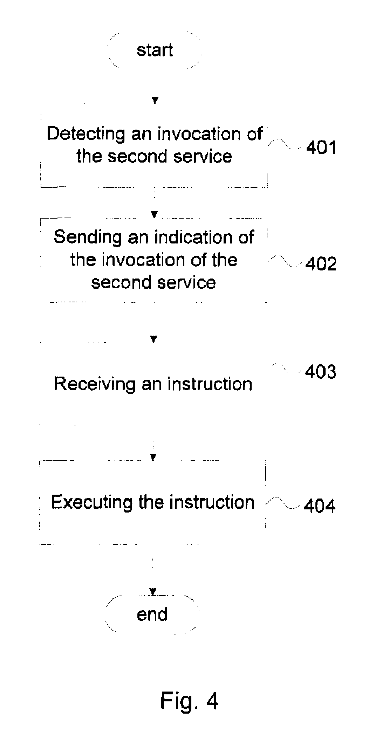

Fig. 4 depicts exemplary steps performed by the service switching entity of Fig. 2a, 2b and 2c according to an embodiment of the invention.

In a first step 401 the service switching entity detects an invocation of the second service.

In a second step 402 the service switching entity sends a message comprising an indication of the invocation of the second service to the service control entity.

In a third step 403 the service switching entity receives an instruction from the service control entity according to a procedure for handling the invocation of the second service.

In a fourth step 404 the service switching entity executes the instruction.

The method may end here or may continue with any of the steps described herein.

In an embodiment the service switching entity further receives a request for monitoring the invocation of the network based service from the service control entity.

In an embodiment the step of detecting comprises
- creating an instance of a Basic Call State Model comprising an event detection point related to the invocation of the second service,
- receiving a message comprising an indication of the invocation of the second service from the switching node,
- determining that the message constitutes an event related to the event detection point.

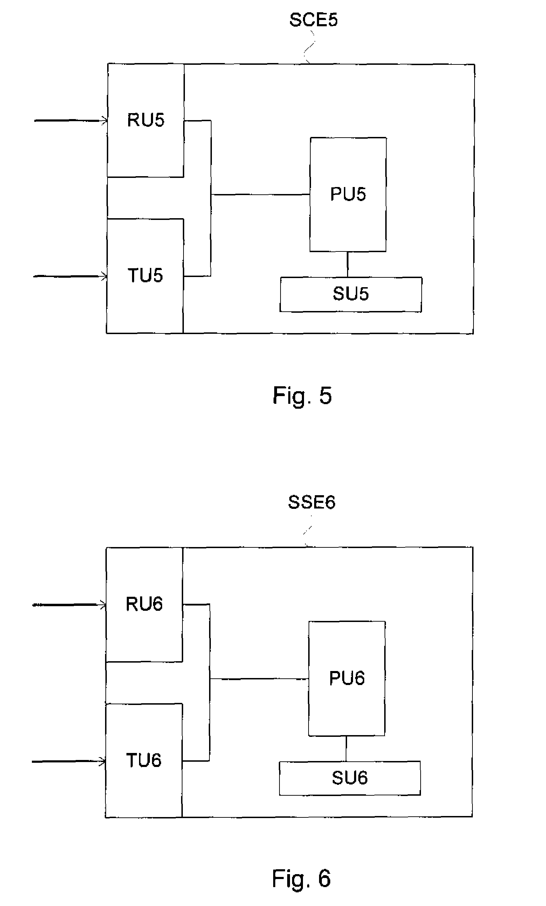

Fig. 5 depicts an embodiment of the service control entity SCP204 of Fig. 3 comprising a receiving unit RU5 for receiving messages, a transmitting unit TU4 for transmitting messages, a processing unit PU5 for controlling further units and for processing messages and information, and preferably a storage unit SU5 for storing and/or obtaining of stored information.

The receiving unit RU5 is adapted to receive a message comprising an indication of an invocation of the second service from the service switching entity. The processing unit PU5 is adapted to process the indication of the invocation of the second service. The processing unit PU5 is further adapted to select a procedure for handling the invocation of the second service based on a knowledge about the second service and a knowledge about the first service Furthermore the processing unit PU5 is adapted to initiate the transmission to the service switching entity via the transmitting unit of an instruction according to the procedure for handling the invocation of the second service.

In an embodiment the processing unit PU5 may be adapted to initiate the transmission via the transmitting unit of a request for monitoring the invocation of the second service to the service switching entity.

In an embodiment the receiving unit RU5 is adapted to receive a message from the service switching entity comprising the knowledge about the second service and the processing unit PU5 is adapted to extract and process the knowledge about the second service.

In an embodiment the processing unit PU5 is adapted to select a procedure procedure comprising one of:
- storing the knowledge about the second service in a call log related to the first service,
- initiating discontinuing the call,
- initiating the modification of a notification of the second service sent by the switching node towards the first call party.

In an embodiment the knowledge about the second service comprises one of:
- an indication of a call forwarding number, if the second service is a call forwarding service,
- an indication of a transfer number, if the second service is an explicit call transfer service,
- an indication of an additional party number, if the second service is a multi party service.

In an embodiment the knowledge about the first service comprises a call screening list. This allows the service control entity to screen any of the indicated numbers comprised in the knowledge about the second service according to the call screening list defined for the first service.

Fig. 6 depicts an embodiment of the service switching entity SSF203 of Fig. 4 comprising a receiving unit RU6 for receiving messages, a transmitting unit TU6 for transmitting messages, a processing unit PU6 for controlling further units and for processing messages and information, and preferably a storage unit SU6 for storing and/or obtaining of stored information.

The processing unit PU6 is adapted to initiate a procedure to detect an invocation of the second service. The processing unit PU6 is adapted to initiate the transmission of a message comprising an indication of the invocation of the second service to a service control entity via the transmitting unit TU6. The receiving unit RU6 is adapted to receive an instruction from the service control entity according to a procedure for handling the invocation of the second service. The processing unit PU6 is adapted to process and execute the instruction.

In an embodiment the processing unit may be adapted to
- initiate a procedure for detecting an invocation of the second service,
- initiate the transmission via the transmitting unit TU6 of a message comprising an indication of the invocation of the second service to the service control entity,
- processing an instruction received via the receiving unit RU6 from the service control entity according to a procedure for handling the invocation of the second service, and
- executing the instruction.

In an embodiment the receiving unit RU6 may be adapted to receive a request for monitoring the invocation of the network based service from the service control entity and the processing unit PU6 may be adapted to extract and process the request.

## Claims

1. A method for controlling a call in a telecommunications network comprising a service control entity (SCP204), a service switching entity (SSF203) and a switching node (MSC205), the call being subject to a first service invoked for a first call party (CP201) and provided by the service control entity (SCP204) and to a second service invoked for a second call party (CP207) and provided by the switching node (MSC205), wherein the service control entity (SCP204) performs the steps of:
- receiving (239) a message comprising an indication of an invocation of the second service from the service switching entity,
- selecting a procedure for handling the invocation of the second service based on a knowledge about the second service and a knowledge about the first service, and
- sending (240) an instruction to the service switching entity (SSF203) according to the procedure for handling the invocation of the second service.

2. The method according to claim 1 further comprising sending a request for monitoring the invocation of the second service to the service switching entity (SSF203).

3. The method according to any of the preceding claims, wherein the message received from the service switching entity (SSF203) further comprises the knowledge about the second service.

4. The method according to any of the preceding claims, wherein the procedure comprises one of:
- storing the knowledge about the second service in a call log related to the first service,
- initiating discontinuing the call,
- initiating the modification of a notification of the second service sent by the switching node (MSC205) towards the first call party (CP201).

5. The method according to any of the preceding claims, wherein the knowledge about the second service comprises one of:
- an indication of a call forwarding number, if the second service is a call forwarding service,
- an indication of a transfer number, if the second service is an explicit call transfer service,
- an indication of an additional party number, if the second service is a multi party service.

6. The method according to any of the preceding claims, wherein the knowledge about the first service comprises a call screening list.

7. A method for controlling a call in a telecommunications network comprising a service control entity (SCP204), a service switching entity (SSF203) and a switching node (MSC205), the call being subject to a first service invoked for a first call party (CP201) and provided by the service control entity (SSF203) and to a second service invoked for a second call party (CP207) and provided by the switching node (MSC205), wherein the service switching entity (SSF203) performs the steps of:
- detecting (225, 238) an invocation of the second service,
- sending a message (239) comprising an indication of the invocation of the second service to the service control entity (SCP204),
- receiving (240) an instruction from the service control entity (SCP204) according to a procedure for handling the invocation of the second service, and
- executing (241) the instruction.

8. The method according to claim 7, further comprising
- receiving a request for monitoring the invocation of the network based service from the service control entity (SCP204).

9. The method according to any of the preceding claims, wherein the step of detecting comprises
- creating an instance of a Basic Call State Model comprising an event detection point related to the invocation of the second service,
- receiving (238) a message comprising an indication of the invocation of the second service from the switching node (MSC205),
- determining that the message constitutes an event related to the event detection point.

10. A service control entity (SCP204) comprising a receiving unit for receiving messages, a transmitting unit for transmitting messages, a processing unit for controlling further units and for processing messages and information, wherein
- the receiving unit is adapted to receive a message comprising an indication of an invocation of the second service from the service switching entity (SSF203),
- the processing unit is adapted to process the indication of the invocation of the second service,
- the processing unit is further adapted to select a procedure for handling the invocation of the second service based on a knowledge about the second service and a knowledge about the first service, and
- the processing unit is further adapted to initiate the transmission to the service switching entity (SSF203) via the transmitting unit of an instruction according to the procedure for handling the invocation of the second service.

11. A service switching entity (SSF203) comprising a receiving unit for receiving messages, a transmitting unit for transmitting messages, a processing unit for controlling further units and for processing messages and information, wherein
- the processing unit is adapted to initiate a procedure to detect an invocation of the second service,
- the processing unit is adapted to initiate the transmission of a message comprising an indication of the invocation of the second service to a service control entity (SCP204) via the transmission unit,
- the receiving unit is adapted to receive an instruction from the service control entity (SCP204) according to a procedure for handling the invocation of the second service, and
- the processing unit is adapted to process and execute the instruction.

12. A computer program loadable into a processing unit of a service control entity (SCP204) the computer program comprising portions of software code adapted to perform the steps of a method according to any of the claims 1 to 6.

13. A computer-readable medium product comprising a computer program according to claim 12.

14. A computer program loadable into a processing unit of a service switching entity (SSF203) the computer program comprising portions of software code adapted to perform the steps of a method according to any of the claims 7 to 9.

15. A computer-readable medium product comprising a computer program according to claim 14.
